# EUROPÄISCHE PATENTANMELDUNG

(11) **EP 2 955 201 A1**
(43) Veröffentlichungstag der Anmeldung: **16.12.2015**
(21) Anmeldenummer: 14171993.0
(22) Anmeldetag: 11.06.2014
(51) Int. Cl.: C08K 5/20, C08K 5/42, C08L 69/00, C08K 7/14

(54) **Glasfaserverstärkte Polycarbonat-Zusammensetzungen**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft flammgeschützte, glasfaserverstärkte Polycarbonat-Zusammensetzungen mit hoher Wärmeformbeständigkeit sowie hohem Widerstand bei elastischer Verformung, verbesserter Schmelzestabilität in Kombination mit verbesserten Flammschutzeigenschaften gerade bei dünnwandigen Bauteilen mit einer Wanddicke von ≤ 1,5 mm.

## Beschreibung

Die vorliegende Erfindung betrifft witterungsstabile, glasfaserverstärkte Polycarbonat-Zusammensetzungen mit hoher Wärmeformbeständigkeit sowie hohem Widerstand bei elastischer Verformung sowie verbesserter Schmelzestabilität in Kombination mit verbesserten Flammschutzeigenschaften, insbesondere bei dünnwandigen Bauteilen mit einer Wanddicke von ≤ 1,5 mm.

Weiterhin betrifft die vorliegende Erfindung die Verwendung der erfindungsgemäßen Zusammensetzungen zur Herstellung von Formteilen, wie dünnwandigen Gehäuseteilen oder Schalterkästen im EE-(Elektro/Elektronik) und IT-(Informationstechnologie)Bereich.

Diese Formmassen eignen sich insbesondere für Bauteile, die bei einer Wandstärke von 1,5 mm die Brandschutzklassifikation UL94 V0 erfüllen. Des Weiteren müssen die erfindungsmäßen Formmassen eine ausreichend hohe Schmelzestabilität von ≤ 1,5 cm³/10 min aufweisen, ausgedrückt durch die Differenz aus der Schmelzvolumenfließrate in cm³/10 min bei 300°C unter einer Belastung von 1,2 kg und einer Haltezeit von 20 min und aus der Schmelzvolumenfließrate in cm³/10 min bei 300°C unter einer Belastung von 1,2 kg, ohne vorherige Haltezeit, jeweils bestimmt gemäß ISO 1133. Die erfindungsgemäßen Formmassen zeichnen sich bevorzugt weiterhin durch eine hohe Wärmeformbeständigkeit, bestimmt gemäß ISO 306, von ≥ 140°C, durch einen hohen Widerstand bei elastischer Verformung von ≥ 3.500 MPa, bestimmt gemäß ISO 527, sowie durch die Möglichkeit der Verwendung im Außeneinsatz aus.

Aus dem Stand der Technik sind glasfaserverstärkte Polycarbonat-Zusammensetzungen bekannt.

Die US 2013/0131241 A1 beschreibt eine flammgeschützte thermoplastische Zusammensetzung mit guter Flammschutzwirkung bei geringen Wanddicken bei gleichzeitig guten Fließeigenschaften, Schlagzähigkeit und gutem Elastizitätsmodul. Es werden Polymerzusammensetzungen, enthaltend ein Polycarbonat, ein Flammschutzmittel, Talk, Glasfasern und einen Säurestabilisator in synergistischen Mengen, beschrieben. Die beschriebenen glasfaserverstärkten Polycarbonat-Zusammensetzungen zeichnen sich nicht durch eine ausgeprägte Schmelzestabilität und nicht durch die Brandschutzklassifikation UL94 V0 bei 1,5 mm aus. Die Verwendung der Polycarbonat-Zusammensetzungen im Außeneinsatz wird nicht beschrieben.

Die Verwendung von asymmetrischen Diaryloxalamiden in Polycarbonat-Zusammensetzungen ist weiterhin bekannt.

Die EP 0 152 012 A2 beschreibt die Verwendung von asymmetrischen Diaryloxalamiden in Polycarbonat- oder Copolycarbonat-Zusammensetzungen zur Verringerung der Vergilbungsneigung von daraus hergestellten Formkörpern bei Bestrahlung mit ionisierter Strahlung. Ein Einfluss der asymmetrischen Diaryloxalamide auf die Schmelzestabilität von Glasfaser-gefüllten Polycarbonat-Zusammensetzungen sowie auf das Brandverhalten daraus hergestellter Formkörper wird nicht erwähnt.

Die DE 11 2005 002 594 T5 beschreibt Polycarbonat-Lichtdiffusionsharzzusammensetzungen, enthaltend ein aromatisches Polycarbonat, ein Lichtdiffusionsmittel sowie ein lichtbeständiges Mittel mit einer maximalen Absorptionswellenlänge bei 290 bis 330 nm in einem Ultraviolett-Absorptionsspektrum. Der Vorteil im Brandverhalten der asymmetrischen Diaryloxalamide in glasfaserverstärkten Polycarbonat-Zusammensetzungen gegenüber anderen Lichtschutzmitteln wird nicht erwähnt.

Die WO 2013/079633 A1 beschreibt glasfaserverstärkte Polycarbonat-Zusammensetzungen mit hoher Steifigkeit, verbessertem thermischen und rheologischem Verhalten in Kombination mit verbesserten Flammschutzeigenschaften und signifikant erhöhter Vicat-Temperatur. Die hierin beschriebenen glasfaserverstärkten Polycarbonat-Zusammensetzungen benötigen ein Antidrippingmittel, wie zum Beispiel PTFE (Polytetrafluorethylen), zur Erreichung eines optimalen Brandschutzergebnisses. Der Vorteil im Brandverhalten der asymmetrischen Diaryloxalamide in glasfaserverstärkten Polycarbonat-Zusammensetzungen gegenüber anderen Lichtschutzmitteln wird nicht erwähnt.

Aus dem Stand der Technik geht demnach nicht hervor, dass die Stabilisierung von glasfasergefüllten Polycarbonat-Zusammensetzungen mit asymmetrischen Diaryloxalamiden allein zu Polycarbonat-Zusammensetzungen führt, die sich durch eine verbesserte Schmelzestabilität sowie ein verbessertes Brandverhalten bei Bauteilen einer Dicke von 1,5 mm auszeichnen.

Aufgabe der vorliegenden Erfindung war es daher, Zusammensetzungen bereitzustellen, die eine hohe Wärmeformbeständigkeit sowie einen hohen Widerstand bei elastischer Verformung, eine verbesserte Schmelzestabilität in Kombination mit verbesserten Flammschutzeigenschaften gerade bei dünnwandigen Bauteilen mit einer Wanddicke von ≤ 1,5 mm aufweisen.

Überraschenderweise wurde nun gefunden, dass die oben genannten Eigenschaften erhalten werden, wenn Polycarbonat-Zusammensetzungen gemäß Anspruch 1 der vorliegenden Erfindung eingesetzt werden. Die so zusammengesetzten Formmassen zeichnen sich durch eine hohe Wärmeformbeständigkeit sowie einen hohen Widerstand bei elastischer Verformung sowie eine verbesserte Schmelzestabilität in Kombination mit verbesserten Flammschutzeigenschaften gerade bei dünnwandigen Bauteilen mit einer Wanddicke von ≤ 1,5 mm aus.

Gegenstand der vorliegenden Erfindung sind somit Polycarbonat-Zusammensetzungen, enthaltend
A) 10,000 bis 90,000 Gew.-Teile, vorzugsweise 15,000 bis 65,000 Gew.-Teile, besonders bevorzugt 25,000 bis 60,000 Gew.-Teile mindestens eines aromatischen Polycarbonats oder Polyestercarbonats,
B) 4,000 bis 50,000 Gew.-Teile, bevorzugt 5,000 bis 40,000 Gew.-Teile, weiter bevorzugt 5,000 bis 30,000 Gew.-Teile mindestens einer Glasfaser,
C) 0,001 bis 10,000 Gew.-Teile, bevorzugt 0,010 bis 5,000 Gew.-Teile, weiter bevorzugt 0,020 bis 2,000 Gew.-Teile mindestens eines Diaryloxalamids, bevorzugt eines asymmetrischen Diaryloxalamids, und
D) 0,001 bis 1,000 Gew.-Teile, bevorzugt 0,050 bis 0,800 Gew.-Teile, weiter bevorzugt 0,100 bis 0,600 Gew.-Teile, besonders bevorzugt 0,100 bis 0,300 Gew.-Teile mindestens eines Flammschutzmittels auf Basis eines Alkali- und/oder Erdalkalisalzes eines aliphatischen und/oder aromatischen Sulfonsäure-, Sulfonamid- und/oder Sulfonimid-Derivates,
E) 0,000 bis 1,000 Gew.-Teile Entformungsmittel,
wobei die Zusammensetzung frei von Antidrippingmitteln und frei von Säurestabilisatoren ausgewählt aus der Gruppe Phosphorsäure, Phosphonsäure, Zinkphosphat, Zinkdihydrogenphosphat, Natriumphosphat und/oder Dinatriumdihydrogenphosphat ist.

Die erfindungsgemäßen Zusammensetzungen können grundsätzlich auch weitere übliche Additive enthalten. Solche Additive, wie sie üblicherweise bei Polycarbonaten zugesetzt werden, sind insbesondere die in EP 0 839 623 A1, WO 96/15102 A2, EP-A 0 500 496 A1, im "Additives for Plastics Handbook, John Murphy, Elsevier, Oxford 1999" oder "Plastics Additives Handbook", Hans Zweifel, 5th Edition 2000, Hanser Verlag, München beschriebenen Antioxidantien, UV-Absorber, IR-Absorber, Antistatika, Thermostabilisatoren, optischen Aufheller, Lichtstreumittel, Farbmittel wie Pigmente, auch anorganischen Pigmente, Ruß und/oder Farbstoffe sowie anorganischen Füllstoffe wie Titandioxid oder Bariumsulfat in den für Polycarbonat üblichen Mengen, von im Allgemeinen bis zu 5 Gew.-%, bevorzugt 0,01 bis 3 Gew.-%, bezogen auf die Gesamtzusammensetzung. Diese Additive können einzeln oder auch im Gemisch zugesetzt werden.

Erfindungsgemäße Zusammensetzungen enthalten bevorzugt keinen Talk.

Bevorzugt enthalten die erfindungsgemäßen Zusammensetzungen keine weiteren Komponenten oder keine weiteren Komponenten außer Ruß und/oder Farbmitteln wie Pigmenten.

Die erfindungsmäßen Zusammensetzungen sind weiterhin dadurch gekennzeichnet, dass sie den UL94-Test mit der Bewertung V0 bei Wandstärken ≤ 1,5 mm bestehen.

Die erfindungsmäßen Formmassen sind weiterhin dadurch gekennzeichnet, dass Sie eine ausreichend hohe Schmelzestabilität von ≤ 1,5 cm³/10 min aufweisen, ausgedrückt durch die Differenz aus der Schmelzvolumenfließrate in cm³/10 min bei 300°C unter einer Belastung von 1,2 kg und einer Haltezeit von 20 min und aus der Schmelzvolumenfließrate in cm³/10 min bei 300°C unter einer Belastung von 1,2 kg ohne vorherige Haltezeit.

### Komponente A

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die thermoplastischen Polycarbonate einschließlich der thermoplastischen, aromatischen Polyestercarbonate haben mittlere Molekulargewichte M_{w} (ermittelt durch Messung der relativen Viskosität bei 25°C in CH₂Cl₂ und einer Konzentration von 0,5 g pro 100 ml CH₂Cl₂) von 20.000 g/mol bis 32.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Geeignete Dihydroxyarylverbindungen für die Herstellung von Polycarbonaten sind solche der Formel (2)

HO-Z-OH (2),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3) 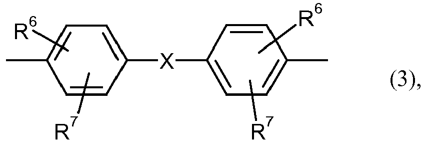 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-,
oder für einen Rest der Formel (3a) oder (3b) 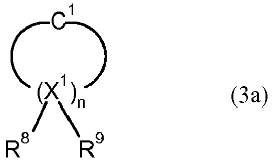 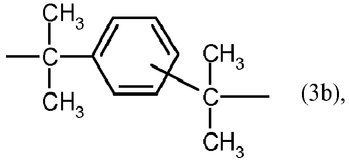 wobei
- R⁸ und R⁹: für jedes X¹ individuell wählbar sind und unabhängig voneinander Wasserstoff oder C₁-bis C₆-Alkyl, vorzugsweise Wasserstoff, Methyl oder Ethyl bedeuten und
- X¹: Kohlenstoff bedeutet und
- n: eine ganze Zahl von 4 bis 7, bevorzugt 4 oder 5 bedeutet, mit der Maßgabe, dass an mindestens einem Atom X¹, R⁸ und R⁹ gleichzeitig Alkyl sind.

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenylethan, 2,2-Bis-(4-hydroxyphenyl)-propan, 2,4-Bis-(4-hydroxy-phenyl)-2-methylbutan, 1,3-Bis-[2-(4-hydroxyphenyl)-2-propyl]-benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York, 1964, S. 28 ff.; S. 102 ff.", und in "D.G. Legrand, J.T. Bendler, Handbook of Polycarbonate Science and Technology, Marcel Dekker, New York, 2000, S. 72 ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert.-Butylphenol, iso-Octylphenol, Cumylphenol, deren Chlorkohlensäureester oder Säurechloride von Monocarbonsäuren bzw. Gemischen aus diesen Kettenabbrechern werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt bevorzugt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

### Komponente B

Komponente B ist ein Glas, bestehend aus einer Glaszusammensetzung, ausgewählt aus der Gruppe der M-, E-, A-, S-, R-, AR-, ECR-, D-, Q- oder C-Gläser, wobei E-, S- oder C-Glas weiter bevorzugt sind. Erfindungsgemäß werden Glasfasern aus diesen Gläsern eingesetzt. Grundsätzlich ist es aber auch denkbar, unter entsprechender Änderung der Eigenschaften Glasmassivkugeln, Glashohlkugeln, Glasperlen, Glasflakes oder Glasbruch einzusetzen.

Die Glasfasern können in Form von Endlosfasern (Rovings), Schnittglasfasern, Mahlfasern, Glasfasergeweben oder Mischungen der vorgenannten Formen eingesetzt werden, wobei die Schnittglasfasern sowie die Mahlfasern bevorzugt eingesetzt werden. Besonders bevorzugt werden Schnittglasfasern eingesetzt. Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm. Schnittglasfasern können mit unterschiedlichen Querschnitten eingesetzt werden. Bevorzugt werden runde, eliptische, ovale, 8-förmige und flache Querschnitte eingesetzt, wobei die runden, ovalen sowie flachen Querschnitte besonders bevorzugt sind. Der Durchmesser von Rundfasern beträgt bevorzugt 5 bis 25 µm, weiter bevorzugt 6 bis 20 µm, besonders bevorzugt 7 bis 17 µm.

Bevorzugte Flach- und Ovalglasfasern weisen ein Querschnittverhältnis aus Höhe zu Breite von ca. 1,0:1,2 bis 1,0:8,0, bevorzugt 1,0:1,5 bis 1,0:6,0, besonders bevorzugt 1,0:2,0 bis 1,0:4,0 auf. Die Flach- und Ovalglasfasern weisen weiterhin eine durchschnittliche Faserhöhe von 4 µm bis 17 µm, bevorzugt von 6 µm bis 12 µm und besonders bevorzugt von 6 µm bis 8 µm sowie eine durchschnittlichen Faserbreite von 12 µm bis 30 µm, bevorzugt von 14 µm bis 28 µm und besonders bevorzugt von 16 µm bis 26 µm auf.

In einer bevorzugten Ausführungsform sind die Glasfasern mit einer Glasschlichte an der Oberfläche der Glasfaser modifiziert. Bevorzugte Glasschlichten sind Epoxy-modifizierte, Polyurethan-modifizierte und nichtmodifizierte Silanverbindungen sowie Mischungen der vorgenannten Silanverbindungen.

Die verwendeten Glasfasern zeichnen sich dadurch aus, dass die Auswahl der Faser nicht durch die Wechselwirkungscharakteristik der Faser mit der Polycarbonatmatrix beschränkt ist. Sowohl bei einer starken Anbindung der Faser an die Polymermatrix als auch bei einer nicht-anbindenden Faser zeigt sich die erfindungsgemäß gewünschte Verbesserung der Eigenschaften der Zusammensetzungen. Eine starke Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

### Komponente C

Bei Komponente C handelt es sich um Diaryloxalamide, und zwar symmetrische wie auch asymmetrische. Solche Verbindungen sind hinlänglich bekannt.

Bevorzugt wird als Komponente C ein asymmetrisches Diaryloxalamid eingesetzt. Die Herstellung solcher Verbindungen ist beispielsweise in DE 1 907 403 A beschrieben. Hierbei handelt es sich um Strukturen, welche von der allgemeinen Formel (IV) abgeleitet werden. 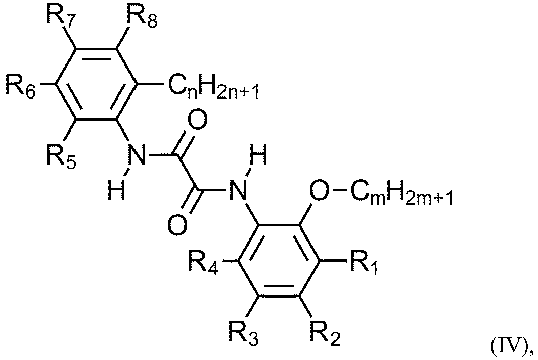 worin
R₁, R₂, R₃, R₄, R₅, R₆, R₇ und R₈ unabhängig voneinander
H, Cl, Br, Aryl, Alkylaryl, -CₙH₂ₙ₊₁, -CₙH₂ₙ₋₁, -OCₙH₂ₙ₊₁ und -O-Aryl bedeuten und somit gleich oder verschieden sein können,
und worin
m eine ganze Zahl von 1 bis 8 und
n eine ganze Zahl von 1 bis 4 bedeuten,
wobei n nicht in allen Fällen gleich sein muss und wobei
die Aryl- und Aralkylradikale nicht mehr als 8 Kohlenstoffatome enthalten (bezogen auf jeden Rest R₁ bis R₈ für sich).

Bei einer besonders bevorzugten Ausführungsform sind R₁ bis R₈ gleich H sowie n und m gleich 2.

Besonders bevorzugt wird als asymmetrisches Diaryloxalamind N-(2-Ethoxyphenyl)-N'-(2-ethylphenyl)-ethandiamid eingesetzt.

### Komponente D

Geeignete Flammschutzmittel im Sinne der vorliegenden Erfindung sind Alkali- und/oder Erdalkalisalze von aliphatischen und/oder aromatischen Sulfonsäure-, Sulfonamid- und/oder Sulfonimidderivaten, z.B. Kaliumperfluorbutansulfonat, Kaliumdiphenylsulfonsulfonat, N-(p-Tolylsulfonyl-)-p-toluolsulfimid-Kaliumsalz, N-(N'-Benzylaminocarbonyl)-sulfanylimid-Kaliumsalz.

Salze, die in den erfindungsgemäßen Formmassen verwendet werden können, sind Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid, N-(p-tolylsulfonyl-)-p-toluolsulfimid-Kaliumsalz, N-(N'-Benzylaminocarbonyl)-sulfanylimid-Kaliumsalz. Grundsätzlich können auch Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithiumphenylphosphonat, Trinatrium- oder Trikaliumhexafluoroaluminat, Dinatrium- oder Dikaliumhexafluorotitanat, Dinatrium- oder Dikaliumhexafluorosilikat, Dinatrium- oder Dikaliumhexafluorozirkonat, Natrium- oder Kaliumpyrophosphat, Natrium- oder Kaliummetaphosphat, Natrium- oder Kaliumtetrafluoroborat, Natrium- oder Kaliumhexafluorophosphat, Natrium- oder Kalium- oder Lithiumphosphat eingesetzt werden, wobei die erfindungsgemäßen Zusammensetzungen bevorzugt keine weiteren Flammschutzmittel enthalten außer die Alkali- und/oder Erdalkalisalze von aliphatischen und/oder aromatischen Sulfonsäure-, Sulfonamid- und/oder Sulfonimidderivaten.

Bevorzugt werden Natrium- oder Kaliumperfluorbutansulfat, Natrium- oder Kaliumperfluoroctansulfat, Natrium- oder Kaliumdiphenylsulfonsulfonat und Natrium- oder Kalium-2,4,6-trichlorbenzoat und N-(p-Tolylsulfonyl-)-p-toluolsulfimid-Kaliumsalz, N-(N'-Benzylaminocabonyl)-sulfanylimid-Kaliumsalz eingesetzt. Ganz besonders bevorzugt sind Kalium-nona-fluor-1-butansulfonat und Natrium- oder Kaliumdiphenylsulfonsulfonat. Kalium-nona-fluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutansulfonylfluorid FC-51 (Firma 3M, USA) kommerziell erhältlich. Ebenfalls sind Mischungen der genannten Salze geeignet. Kalium-nona-fluor-1-butansulfonat wird besonders bevorzugt eingesetzt.

### Komponente E

Geeignete Entformungsmittel sind beispielsweise die Ester oder Teilester von ein- bis sechswertigen Alkoholen, insbesondere die des Glycerins, des Pentaerythrits oder von Guerbet-Alkoholen.

Einwertige Alkohole sind beispielsweise Stearylalkohol, Palmitylalkohol und Guerbet-Alkohole. Ein zweiwertiger Alkohol ist beispielsweise Glycol; ein dreiwertiger Alkohol ist beispielsweise Glycerin; vierwertige Alkohole sind beispielsweise Pentaerythrit und Mesoerythrit; fünfwertige Alkohole sind beispielsweise Arabit, Ribit und Xylit; sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀-bis C₃₆-Monocarbonsäuren und gegebenenfalls Hydroxymonocarbonsäuren, vorzugsweise mit gesättigten, aliphatischen C₁₄- bis C₃₂-Monocarbonsäuren und gegebenenfalls Hydroxymonocarbonsäuren.

Die kommerziell erhältlichen Fettsäureester, insbesondere des Pentaerythrits und des Glycerins, können herstellungsbedingt < 60 Gew.-% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Erfindungsgemäße Zusammensetzungen enthalten kein Antidrippingmittel und insbesondere bevorzugt kein PTFE (Polytetrafluorethylen).

Geeignete Antioxidantien bzw. Thermostabilisatoren sind beispielsweise alkylierte Monophenole, Alkylthiomethylphenole, Hydrochinone und alkylierte Hydrochinone, Tocopherole, hydroxylierte Thiodiphenylether, Alkylidenbisphenole, O-, N- und S-Benzylverbindungen, hydroxybenzylierte Malonate, aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide von β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite wie Triphenylphosphin, Tritoluylphosphin oder (2,4,6-Tri-t-butylphenyl)-(2-butyl-2-ethyl-propan-1,3-diyl)-phosphit, Phosphonate und Phosphane, insbesondere solche, bei denen die organischen Reste völlig oder teilweise aus aromatischen - gegebenenfalls substituierten - Resten bestehen.

Ganz besonders geeignete Additive sind IRGANOX 1076^{®} (Octadecyl-3-(3,5-di-tert-butyl-4-hydroxyphenyl)propionat) sowie Triphenylphosphin (TPP).

Als Farbstoffe oder Pigmente können beispielsweise organische oder anorganische Pigmente oder organische Farbstoffe oder dergleichen eingesetzt werden.

In einer bevorzugten Ausführungsform werden als farbgebende Komponenten Pigmentruß, Rutilpigment und/oder Eisenoxidrot verwendet.

Bevorzugte erfindungsgemäße Polycarbonat-Zusammensetzungen bestehen aus
A) 10,000 bis 90,000 Gew.-Teile, vorzugsweise 15,000 bis 65,000 Gew.-Teile, besonders bevorzugt 25,000 bis 60,000 Gew.-Teile mindestens eines aromatischen Polycarbonats oder Polyestercarbonats,
B) 4,000 bis 50,000 Gew.-Teile, bevorzugt 5,000 bis 40,000 Gew.-Teile, weiter bevorzugt 5,000 bis 30,000 Gew.-Teile mindestens einer Glasfaser,
C) 0,001 bis 10,000 Gew.-Teile, bevorzugt 0,010 bis 5,000 Gew.-Teile, weiter bevorzugt 0,020 bis 2,000 Gew.-Teile mindestens eines Diaryloxalamids, bevorzugt eines asymmetrischen Diaryloxalamids, und
D) 0,001 bis 1,000 Gew.-Teile, bevorzugt 0,050 bis 0,800 Gew.-Teile, weiter bevorzugt 0,100 bis 0,600 Gew.-Teile, besonders bevorzugt 0,100 bis 0,300 Gew.-Teile mindestens eines Flammschutzmittels auf Basis eines Alkali- und/oder Erdalkalisalzes eines aliphatischen und/oder aromatischen Sulfonsäure-, Sulfonamid- und/oder Sulfonimid-Derivates,
E) 0,000 bis 1,000 Gew.-Teile, besonders bevorzugt 0,200 bis 0,800 Gew.-Teile Entformungsmittel
sowie optional Thermostabilisatoren und/oder Farbmitteln und/oder Ruß und sind
frei von Antidrippingmitteln und
frei von Säurestabilisatoren ausgewählt aus der Gruppe Phosphorsäure, Phosphonsäure, Zinkphosphat, Zinkdihydrogenphosphat, Natriumphosphat und/oder Dinatriumdihydrogenphosphat.

Die Herstellung der erfindungsgemäßen Polycarbonat-Zusammensetzungen, enthaltend die oben genannten Komponenten, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet.

Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten und vorgenannten Additive der erfindungsgemäßen Zusammensetzung durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Herstellung der Kunststoffformteile kann vorzugsweise durch Spritzguss, Thermoformen, Extrusion, Lamination, Film-Insert-Moulding, Inmould-Decoration, Inmould-Coating und Rapid-Heatcycle Moulding erfolgen.

Von Interesse ist auch die Verwendung der erfindungsgemäßen Kunststoffzusammensetzung zur Herstellung von Mehrschichtsystemen. Hierbei wird die erfindungsgemäße Kunststoffzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Erfindungsgemäße Zusammensetzungen eignen sich zur Herstellung von Formteilen, wie dünnwandiger, steifer Bauteile, insbesondere solcher mit einer Wandstärke ≤ 1,5 mm, insbesondere für Rahmenbauteile für LCD/LED-Geräte, im EE- und IT-Bereich.

### Beispiele

### Komponente A-1

Lineares Polycarbonat auf Basis Bisphenol-A der Bayer MaterialScience AG mit einer MVR von ca. 6,0 cm³/10 min (gemäß ISO 1133, bei 300°C und 1,2 kg Belastung).

### Komponente A-2

Lineares Polycarbonat auf Basis Bisphenol-A der Bayer MaterialScience AG mit einer MVR von ca. 10,0 cm³/10 min (gemäß ISO 1133, bei 300°C und 1,2 kg Belastung).

### Komponente B-1

CS 7942 der Firma Lanxess AG, d.h. geschnittene runde Kurzglasfasern (anbindend) mit einem durchschnittlichen Faserdurchmesser von 14 µm und einer durchschnittlichen Faserlänge von 4,5 mm.

### Komponente B-2

CS 03 PE 936 der Firma Nittobo, d.h. geschnittene runde Kurzglasfasern (anbindend) mit einem durchschnittlichen Faserdurchmesser von 13 µm und einer durchschnittlichen Faserlänge von 3,0 mm.

### Komponente C-1

Tinuvin 312, d.h. N-(2-Ethoxyphenyl)-N'-(2-ethylphenyl)-ethandiamid (CAS-Nummer 23949-66-8).

### Komponente C-2

Tinuvin 329, d.h. 2-(2H-Benzotriazol-2-yl)-4-(1,1,3,3-tetramethylbutyl)phenol (CAS-Nummer 52188-76-8).

### Komponente D

Kalium-nonafluor-1-butansulfonat (Bayowet®C4) von der Firma Lanxess, Leverkusen, Deutschland (CAS-Nr. 29420-49-3).

### Komponente E

Pentaerythrittetrastearat (Loxiol VPG 861) von Emery Oleochemicals.

### Komponente F-1

Bayferrox 130M der Lanxess AG, Eisenoxidrot-Pigment (CAS Nummer 1309-37-1).

### Komponente F-2

Lamp Black 101 von Orion Engineered Carbons, Pigmentruß (CAS-Nummer 1333-86-4).

### Komponente F-3

Kronos 2230 von Kronos, Inc., Rutilpigment (CAS-Nummer 13463-67-7).

Das Mischen der Komponenten A bis F erfolgte auf einem ZSK 25 Laborextruder (Werner & Pfleiderer) bei einer Massetemperatur von 300°C, einem Durchsatz von 15 kg/h und einer Schneckenrotationsfrequenz von 200 U/min. Die Formkörper wurden auf einer Spritzgießmaschine (Typ Arburg 270E) bei 300°C hergestellt.

Für die Einstufung eines flammgeschützten Kunststoffs in die Brandklasse UL94 V-0 müssen im Einzelnen die folgenden Kriterien erfüllt sein: bei einem Satz von 5 ASTM Normprüfkörpern (Maße: 127 x 12,7 x X, mit X = Dicke des Prüfkörpers, z.B. 2,0; 1,2; 1,0 und 0,75 mm) dürfen alle Proben nach zweimaliger Beflammung von 10 Sekunden Dauer mit einer offenen Flamme definierter Höhe nicht länger als 10 Sekunden nachbrennen. Die Summe der Nachbrennzeiten bei 10 Beflammungen von 5 Proben darf nicht größer als 50 Sekunden sein. Zudem darf kein brennendes Abtropfen, vollständiges Abbrennen oder Nachglühen des jeweiligen Prüfkörpers von länger als 30 Sekunden erfolgen. Die Einstufung UL94 V-1 verlangt, dass die Einzelnachbrennzeiten nicht länger als 30 Sekunden betragen und dass die Summe der Nachbrennzeiten von 10 Beflammungen von 5 Proben nicht größer als 250 Sekunden ist. Die Gesamtnachglühzeit darf nicht mehr als 250 Sekunden betragen. Die übrigen Kriterien sind identisch mit den oben erwähnten. Eine Einstufung in die Brandklasse UL94 V-2 erfolgt dann, wenn es bei Erfüllen der übrigen Kriterien der UL94 V-1 Einstufung zu einem brennenden Abtropfen kommt.

Die MVR wurde bestimmt gemäß ISO 1133 bei 300°C unter Verwendung einer Stempellast von 1,2 kg sowie bei 320°C unter Verwendung einer Stempellast von 2,16 kg. Des Weiteren wurde der MVR in Anlehnung an die ISO 1133 nach einer Haltezeit von 20 min bei 300°C unter Verwendung einer Stempellast von 1,2 kg bei 300°C ermittelt. Es wurde ein Gerät Zwick 4106 der Firma Zwick Roell verwendet.

Die Schmelzestabilität ist definiert als die Differenz aus der MVR bei 300°C unter einer Belastung von 1,2 kg mit vorheriger Haltezeit von 20 min und der MVR bei 300°C unter einer Belastung von 1,2 kg ohne vorherige Haltezeit.

Das Zugmodul wurde gemäß ISO 527 an einem einseitig angespritzten Schulterstab mit einem Kern der Dimension 80 x 10 x 4 mm gemessen.

Die Wärmeformbeständigkeit wurde beurteilt anhand des Vicat B120-Wertes, gemessen an diesen Prüfkörpern gemäß ISO 306.

Die Zusammensetzungen und Testergebnisse sind in nachfolgender Tabelle zusammenfassend dargestellt.

Das erfindungsmäße Beispiel 1 weist eine deutlich höhere Schmelzestabilität, ausgedrückt durch einen geringen Delta MVR von ≤ 1,5 cm³/10 min auf als das Vergleichsbeispiel 1. Die höhere Schmelzestabilität des erfindungsmäßen Beispiels 1 im Vergleich zu Vergleichsbeispiel 1 bleibt auch bei höheren Prüftemperaturen von bis zu 320°C erhalten.

Des Weiteren wird nur bei der Verwendung der asymmetrischen Diaryloxalamide, wie im Beispiel 1 gezeigt, die verbesserte Flammschutzeigenschaft bei dünnwandigen Bauteilen mit einer Wanddicke von 1,2 mm mit dem Ergebnis V0, ermittelt nach UL94V, erreicht. Das Vergleichsbeispiel 1, welches ein Benzotriazol-Derivat anstelle eines asymmetrischen Diaryloxalamids nutzt, erreicht hingegen bei der Brandprüfung nur die Brandschutzklasse V1.

Gerade beim Einsatz von Farbmitteln führt die Verwendung von einem asymmetrischen Diaryloxalamid, wie in dem erfindungsmäßen Beispiel 2 geschehen, zu einer erhöhten Schmelzestabilität, ausgedrückt durch ein Delta MVR von ≤ 1,5 cm³/10 min, sowie einem verbesserten Brandergebnis bei 1,5 mm Wanddicke im Vergleich zu Vergleichsbeispiel 2.

Alle erfindungsmäßen Beispiele erfüllen die Forderung nach einer hohen Wärmeformbeständigkeit von ≥ 140°C sowie nach einem hohen Widerstand bei elastischer Verformung von ≥ 3.500 MPa.

**Tabelle 1**

| | **Komponente** | **Beispiel 1 [Gew.-Teile]** | **Vergleich 1 [Gew.-Teile]** | **Beispiel 2 [Gew.-Teile]** | **Vergleich 2 [Gew.-Teile]** |
|---|---|---|---|---|---|
| | **A-1** | 10,00 | 10,00 | 13,20 | 13,20 |
| | **A-2** | 79,10 | 79,10 | 75,00 | 75,00 |
| | **B-1** | | | 10,00 | 10,00 |
| | **B-2** | 10,00 | 10,00 | | |
| | **C-1** | 0,25 | | 0,25 | |
| | **C-2** | | 0,25 | | 0,25 |
| | **D** | 0,20 | 0,20 | 0,20 | 0,20 |
| | **E** | 0,45 | 0,45 | 0,35 | 0,35 |
| | **F-1** | | | 0,0006 | 0,0006 |
| | **F-2** | | | 0,0032 | 0,0032 |
| | **F-3** | | | 1,00 | 1,00 |
| **MVR (ISO 1133; 300°C; 1,2 kg)** | cm³/10 min | 6,8 | 7,2 | 7,6 | 9,0 |
| **MVR (ISO 1133, 300°C; 1,2 kg); 20 min** | cm³/10 min | 8,1 | 9,3 | 9,1 | 12,1 |
| **Delta MVR** | cm³/10 min | 1,3 | 2,1 | 1,5 | 3,1 |
| **MVR (ISO 1133; 320°C; 2,16 kg)** | cm³/10 min | 23,0 | 24,8 | 28,5 | 31,1 |
| **Vicat (ISO 306; 50N; 120°C)** | °C | 141,5 | 141,5 | 144,9 | 145,0 |
| **Zugmodul (ISO 527-1,-2)** | MPa | 3974 | 4023 | 3564 | 3535 |
| **UL94V (1,2 mm)** | | V0 | V1 | V2 | V2 |
| **UL94V (1,5 mm)** | | V0 | V0 | V0 | V2 |

## Patentansprüche

1. Zusammensetzung, enthaltend
A) 10,000 bis 90,000 Gew.-Teile mindestens eines aromatischen Polycarbonats oder Polyestercarbonats,
B) 4,000 bis 50,000 Gew.-Teile mindestens einer Glasfaser,
C) 0,001 bis 10,000 Gew.-Teile mindestens eines Diaryloxalamids und
D) 0,001 bis 1,000 Gew.-Teile mindestens eines Flammschutzmittels auf Basis eines Alkali- und/oder Erdalkalisalzes eines aliphatischen und/oder aromatischen Sulfonsäure-, Sulfonamid- und/oder Sulfonimid-Derivates,
E) 0,000 bis 1,000 Gew.-Teile Entformungsmittel,
wobei die Zusammensetzung frei von Antidrippingmitteln und
frei von Säurestabilisatoren ausgewählt aus der Gruppe Phosphorsäure, Phosphonsäure, Zinkphosphat, Zinkdihydrogenphosphat, Natriumphosphat und/oder Dinatriumdihydrogenphosphat ist.

2. Zusammensetzung gemäß Anspruch 1, **dadurch gekennzeichnet, dass** das Diaryloxalamid ein asymmetrisches Diaryloxalamid ist.

3. Zusammensetzung gemäß Anspruch 1 oder 2, **dadurch gekennzeichnet, dass**
A) 25,000 bis 60,000 Gew.-Teile mindestens eines aromatischen Polycarbonats oder Polyestercarbonats,
B) 5,000 bis 30,000 Gew.-Teile mindestens einer Glasfaser,
C) 0,020 bis 2,000 Gew.-Teile mindestens eines Diaryloxalamids und
D) 0,100 bis 0,300 Gew.-Teile mindestens eines Flammschutzmittels auf Basis eines Alkali- und/oder Erdalkalisalzes eines aliphatischen und/oder aromatischen Sulfonsäure-, Sulfonamid- und/oder Sulfonimid-Derivates,
E) 0,000 bis 1,000 Gew.-Teile eines Entformungsmittels enthalten sind.

4. Zusammensetzung gemäß einem der vorgehenden Ansprüche, **dadurch gekennzeichnet, dass** die Zusammensetzung frei von weiteren Flammschutzmitteln ist.

5. Zusammensetzung gemäß einem der vorhergehenden Ansprüche, **dadurch gekennzeichnet, dass** die Zusammensetzung frei von Talk ist.

6. Zusammensetzung gemäß einem der vorhergehenden Ansprüche, **dadurch gekennzeichnet, dass** als asymmetrisches Diaryloxalamid N-(2-Ethoxyphenyl)-N'-(2-ethylphenyl)-ethandiamid enthalten ist.

7. Zusammensetzung gemäß einem der vorhergehenden Ansprüche, **dadurch gekennzeichnet, dass** die Zusammensetzung keine weiteren Komponenten außer Ruß oder Farbmitteln enthält.

8. Zusammensetzung gemäß einem der vorhergehenden Ansprüche, **dadurch gekennzeichnet, dass** die Zusammensetzung neben den Komponenten A bis E und ggf. Ruß oder Farbmitteln an weiteren Komponenten nur einen oder mehrere Thermostabilisatoren enthält.

9. Zusammensetzung gemäß einem der vorhergehenden Ansprüche, **dadurch gekennzeichnet, dass** die Zusammensetzung Pigmentruß, Rutilpigment und/oder Eisenoxidrot enthält.
